(19) Europäisches Patentamt
European Patent Office
Office européen des brevets

(11) Publication number: **0 116 978**
**A2**

(12) **EUROPEAN PATENT APPLICATION**

(21) Application number: 84101811.2

(22) Date of filing: 21.02.84

(51) Int. Cl.³: C 08 G 65/08
C 08 G 65/38

(30) Priority: 22.02.83 US 468670

(43) Date of publication of application:
29.08.84 Bulletin 84/35

(84) Designated Contracting States:
BE DE FR GB IT NL SE

(71) Applicant: UNION CARBIDE CORPORATION
Old Ridgebury Road
Danbury Connecticut 06817(US)

(72) Inventor: Meschke, Debra Joann
5381 Big Tyler Road, Apt. 204
Charleston 25 313 West Virginia(US)

(72) Inventor: Hoy, Kenneth Look
839 McQuenn Boulevard
St. Albans 25177(US)

(74) Representative: Wuesthoff, Franz, Dr.-Ing. et al,
Patentanwälte Wuesthoff -v. Pechmann-Behrens-Goetz
Schweigerstrasse 2
D-8000 München 90(DE)

(54) **Connected branch copolymers and method for their production.**

(57) Improved viscosity and other properties are provided in copolymers comprising sets of similar linear polymer segments extending from or between noncrosslinked branching segments which are, in turn, connected to a core segment. The copolymer structure is provided by sequentially reacting branching and linear polymerization monomers. The structure may be expanded by further sequencing of the reactions.

EP 0 116 978 A2

Croydon Printing Company Ltd.

## BACKGROUND OF THE INVENTION

### Field of the Invention

This invention relates to the production of branched copolymers and more particularly to polymeric structures having sets of branched and linear segments, as well as to methods for their production.

### Description of the Prior Art

"Linear" polymers, such as polyethylene oxide glycols which are primarily linear in structure and have hydroxyl groups on one or both ends of the polymer, have been used in a variety of applications. Blending polymers of different molecular weights is often required to provide desired overall properties; however, these blends only marginally fulfill the requirements in certain applications. Problems arise due to the fact that blending changes the molecular weight distribution and, therefore, alters adversely the physical properties, such as melting point, viscosity, solubility, etc. but does not change the basic molecular structure of the polymer which can dramatically affect these and other properties.

For example, a problem arises with blends used as controlled release agents in aqueous solutions. Such blends utilize a low molecular weight polymer having high solubility blended with a high molecular weight polymer having a lower solubility. Such blends suffer from the deficiency that they do not dissolve slowly and uniformly with each use. Instead, it is found that a non-uniform dissolution occurs, with the more soluble, lower

molecular weight polymer dissolving faster than the higher molecular weight polymer. A polymer with high molecular weight, but with increased solubility in comparison to the present high molecular weight materials, would eliminate the need for blending in this type of application while resulting in a product dissolving uniformly over the required time period.

Non-linear alternatives to linear (polyethylene glycol) polymers include the so-called star polymers. These polymers can be made in several ways, such as is described in U.S. Patent 4,116,917 ~~(Eckert)~~. With respect to polyethylene glycols, linear polymers can be made to the desired molecular weight and then a coupling agent can be added which links two or more glycol chains together to form a star structure. Chlorinated compounds are often used as the coupling agents. Another procedure entails reacting a multifunctional, star-shaped initiator molecule, such as trimethylol propane, glycerine, pentaerythritol or dipentaerythritol, with alkylene oxide to reach a desired molecular weight. One benefit of the star polymers is increased functionality. The star polymers also have viscosities that differ from those viscosities for corresponding linear polymers of the same molecular weight. At low molecular weights, star polymers provide aqueous solution viscosities lower than viscosities provided by comparable linear polymers. As the branches get longer, chain entanglement may occur, resulting in viscosities higher than those of linear polymers of comparable molecular weight. Star polymers have been used in lubricants because their viscosity index is higher and they normally have better shear

stability than the linear polymers. These star polymers, however, are not always desirable since the synthetic method used permits the formation of a very high molecular weight fraction which detracts from the basic properties of the polymers and their usefulness in various applications.

Linear polymers in the prior art do not fully meet the needs because at low viscosities the molecular weights are too low and at high molecular weights the viscosities are too high. Blending can be used to alter the viscosity, but adding low molecular weight material causes additional problems. Star polymers have similar viscosity problems. What is therefore needed is polyalkylene glycol polymers with (1) increased functionality, (2) lower viscosity at higher molecular weights, and (3) a relatively narrow molecular weight distribution.

Alternative polymer structures to linear or star polymers include branched copolymers, which can be produced using two procedures. In one procedure, a monomer having more than two reactive sites can be introduced into a polymerization process. Each such monomer has the potential to provide a polyvalent linkage producing a fork or branch in the polymer backbone. This type of monomer can be homopolymerized or copolymerized with other monomers capable of linear polymerization to generate a polymer having a random mixture of linear and branched portions, i.e., a randomly branched polymer.

In a second procedure, randomly branched polymers can be produced by reacting two types of monomers, which when reacted alone would normally yield substantially linear polymers. Random

branching using two such normally linear polymerization monomers, i.e., monomers which produce straight chain or linear polymers, can be made possible by providing one of those monomers with an additional reactive site onto which the other monomer can polymerize. In this manner, one of the normally linear polymerization monomers acts as a polyfunctional monomer to provide branching during the polymerization. These types of randomly branched polymers have been produced by polymerization reactions disclosed in, for example, Belgian Patent 845,729, Russian Patent 229,806 and Russian Patent 372,235. Although there is no specific disclosure of polymers having randomly branched structures, these patents provide for the polymerization of alkylene oxides with glycidol or glycidol-based compounds. Glycidol, which contains epoxide and hydroxyl functional groups, can provide for the formation of branches through three ether linkages when reacted with alkylene oxides. The disclosed processes involve a bulk, one-step reaction procedure producing randomly branched copolymers.

Homopolymers and copolymers of glycidol monomers having a substantially linear backbone are disclosed in U.S. Patent 3,728,321 ~~(Vandenberg)~~, U.S. Patent 4,003,961 ~~(Stevens I)~~, U.S. Patent 4,014,854 ~~(Stevens II)~~ and British Patent 1,516,195 ~~(Vanlerbergh et al.)~~. These patents are concerned with the production of linear polymers using epoxide reactions, leaving the hydroxyl group or its derivative, of the glycidol monomer as a repeating, unreacted side group along an essentially linear polymer backbone.

## SUMMARY OF THE INVENTION

The present invention relates to connected branch copolymers comprising three parts: a basic or starter segment which will be referred to herein for convenience as a "core" segment; branching polymer segments, comprising polymeric entities connected to at least one end of the core segment and which provide sites for further polymerization; and linear polymer segments, which comprise essentially linear polymeric entities connected to the branch polymer at its reactive branching sites. The core segment has a valence of $\underline{v}$, wherein $\underline{v}$ is an integer, and has correspondingly $\underline{v}$ terminal bonds connected to $\underline{v}$ polyvalent, non-crosslinked, branching polymer segments. Each branching polymer segment has an average of $\underline{t}$ terminal bonds, wherein $\underline{t}$ is greater than about 2, and is connected to a set of linear polymer segments, which have an average of $\underline{t}$-1 linear polymer segments per set. There is thereby provided a group of about $\underline{v}$ ($\underline{t}$-1) linear polymer segments wherein the linear polymer segments have substantially similar chain lengths and composition within that group.

A process for producing the connected branch copolymers is also provided comprising two reactions steps. In the first step, a core reactant having at least one reactive functional group is reacted to completion with a non-crosslinking, branching polymerization monomer, thereby producing a branched, core compound having a mono-,di- or polyvalent core segment terminated with non-crosslinked, branch polymer segments each having at least two branch ends, i.e., reactive sites, remote from the core segment. In the second step,

linear polymerization monomers are polymerized onto the branch ends of the branched, core compound produced in the first step, to provide a linearly extended, branched, core compound as a connected branch copolymer. The connected branch copolymer will have linear polymer segments with substantially similar chain lengths and compositions extending from the branch ends. In another embodiment, the two-step reaction sequence is repeated a number of times to produce connected copolymers containing alternating branched and linear polymer segments.

BRIEF DESCRIPTION OF THE DRAWINGS

Figure 1 presents a schematic representation of a randomly branched copolymer disclosed by the prior art.

Figure 2 presents a schematic representation of a star polymer disclosed by the prior art.

Figure 3 presents a schematic representation of a connected branch copolymer of the present invention having a divalent polymer core segment.

Figure 4 presents a schematic representation of a connected branch copolymer of the present invention having a star core segment.

Figure 5 presents a schematic representation of a connected branch copolymer of the present invention having an alternating series of branched and linear polymer segments.

Figure 6 presents a schematic representation of a connected branch copolymer of the present invention having a complex branched, core segment.

Figure 7 is a graph of the relationship between viscosity and molecular weight comparing the connected branch copolymers of the present invention with various polymers of the prior art.

## DETAILED DESCRIPTION OF THE INVENTION

It has been discovered that a new and unique polymer molecular morphology can be achieved by utilizing the sequential combination of branching and linear polymerizations, to produce architecturally designed, connected branch copolymers. Such copolymers provide superior properties, such as reduced viscosity at a given molecular weight, and advantages, such as improved ability to tailor viscosity to specific needs, over polymers disclosed in the prior art.

### Reactants

The connected branch copolymers of the present invention are derived from three main classes of reactants. These reactants, when reacted together in the appropriate manner, form the three primary segments--core, branch, and linear--which make up the connected branch copolymer.

The core segment comprises a reactant which has at least one reactive functional group. The term core reactant encompasses any compound which by the presence of reactive groups acts as a nucleating agent onto which branching polymerization monomers can be bonded. The core reactant can therefore be monomeric or polymeric, organic or inorganic, monofunctional or polyfunctional, so long as at least one reactive functional group is provided in its structure. The term reactive functional group

is defined as any moiety which can react with a complementary moiety in the branching polymerization monomer to form a chemical bond. Such reactions encompass well-established chemical procedures for free radical, substitution or condensation reactions. Representative examples of a few of such reactions include the following:

| Functional Moiety | Complementary Moiety | Group Formed (Containing Covalent Bond) |
|---|---|---|
| —OH | 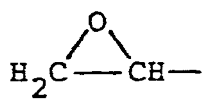 | 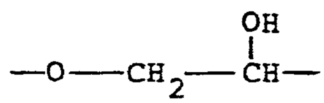 |
| | 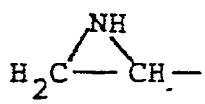 | 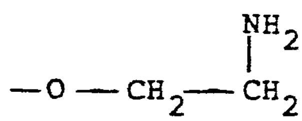 |
| | HOOC— | 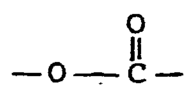 |
| | O = C = N— | 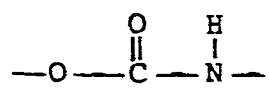 |
| $—NH_2$ | O = C = N— | 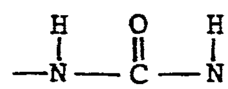 |
| | HOOC— | 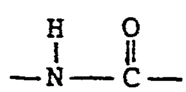 |

Derivatives of such moieties are also intended to be included. The reactive functional group on the core reactant may be selected from either group of functional or complementary moieties so long as the moiety on the branching polymerization monomer is complementary to that moiety.

Monomeric core reactants include hydroxy-containing compounds such as phenols and alkanols; amine-containing compounds such as mono-, di- or polyamines; carboxylic acids and their derivatives; siloxanes; and other compounds which contain at least one reactive functional group.

The core reactant may be provided with a polymeric, linear, branched or star configuration. Linear core reactants which have reactive functional groups include polymers such as polyethers, polyesters, polysiloxanes, polyurethanes, polyamines, polyamides, polyolefins, to name but a few. Preferred linear core reactants include polyalkylene oxide glycols, higher aliphatic polyols and related hydroxy-terminated compounds. In a most preferred embodiment, the linear core reactant contains two reactive functional groups.

Core reactants providing a star configuration are defined as compounds which contain molecular chains having multiple functional groups covalently bonded through a chain of atoms to a single, central atom or backbone. Examples of such star reactants which contain functional hydroxy groups are glycerol, pentaerythritol, dipentaerythritol and trimethylolpropane. Such star core reactants may be extended by polymerizing monomers onto each molecular chain, prior to connected branch copolymer formation.

One molecule of a monomeric or polymeric core reactant is provided as a single starter for each connected branch copolymer molecule.

The second portion of the connected branch copolymer is a branch segment produced by reacting non-crosslinking, branching polymerization monomers with the core reactant. The non-crosslinking, branching polymerization monomers are defined as monomers having functional groups which provide an additional functional group after the monomer has been polymerized at two reactive sites of the monomer. In other words, each branching polymerization monomer provides at least one additional reactive site for polymer chain growth. When the branching polymerization monomer is reacted with a core reactant, one of the reactive functional groups of the monomer reacts with the complementary reactive functional group in the core reactant to produce a branched core compound having a mono-, di- or polyvalent core segment terminated with non-crosslinking, branching polymer segments having at least two branch ends, i.e., sites, defined by the other two reactive sites. One of the remaining reactive sites of the branching polymerization monomer provides a reactive site for extending the branching segment by reaction with another branching polymerization monomer. The remaining reactive site provides a functional group which can be used to initiate a branch, as described below. As a result, branching polymerization monomers containing three reactive sites produce $\underline{b}$ + 1 branches per $\underline{b}$ moles of branching polymerization monomer for each reactive funtional group on the core reactant.

It is important that the connected branch copolymer be essentially free of any crosslinking in order to achieve the desired maximum reduction in neat viscosity without the formation of gel particles when used in aqueous systems. Crosslinking, on the other hand, of the branch structure would tend to decrease the viscosity leading ultimately to gel formation.

Preferred non-crosslinking, branching polymerization monomers are compounds which undergo substantially linear homopolymerization. Such compounds contain a functional group at a third reactive site which does not readily react during the branching polymerization. Examples of such kinds of compounds include imines, hydroxy-containing oxiranes, and other poly-functional compounds which are not crosslinkable.

Particularly preferred non-crosslinking branching polymerization monomers include compounds having three-membered oxygen- or nitrogen-containing ring structures, i.e., oxiranes and imines, respectively. In the case of oxirane compounds, there is an additional functional group present to provide the third reactive site for the branching polymerization monomer. A preferred class of branching polymerization monomers are compounds having the structure:

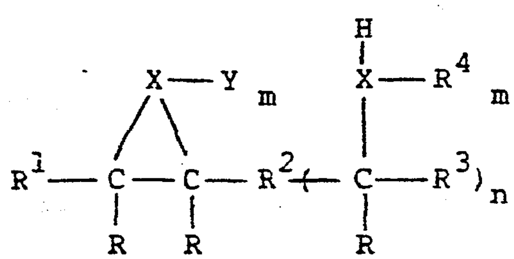

(I)

wherein X is nitrogen, oxygen, or sulfur; Y is alkyl, alkylamine or hydroxyalkyl; R can be hydrogen or lower alkyl; $R^1$ and $R^3$ are each hydrogen, alkyl, aryl or aralkyl; $R^2$ is (1) an alkyl, aryl or aralkyl group which may be connected to $R^1$ to form a cyclic ring, or (2) hydrogen when n is 0; $R^4$ is hydrogen or lower alkyl; m is (1) 0 when X is oxygen or sulfur, or (2) 1 when X is nitrogen; n is 0 or 1, provided that n is 1 when X is oxygen or sulfur. When X is oxygen or sulfur, two reactive sites during polymerization are provided by the X and Y moieties, with a third reactive site provided by a carbon atom in the three-membered ring. When X is nitrogen, providing an imine, two of the three reactive sites are provided by the nitrogen atom with the other reactive site provided by a carbon atom in the three-membered ring.

Particularly preferred branching polymerization monomers with the structure of Formula I are glycidol and ethyleneimine, i.e. aziridine.

The branching polymerization monomer may be added to the core reactant in a molar ratio of ~~about~~ 2 to ~~about~~ 50 moles, and preferably ~~about~~ 2 to ~~about~~ 20 moles, of branching polymerization monomer to equivalent of core reactant. Since b moles of branching polymerization monomer provides b + 1 branches for each reactive core terminal group, the average number of branches per branching segment can be defined by the formula:

$$\frac{b + 1}{c} \qquad \text{(II)}$$

wherein b is the number of moles of branching

monomer added, and c is the number of reactive functional groups on the core reactant. Using this relationship, it is apparent that the branching structure of the branched polymer can be controlled by varying the amount of branching polymerization monomers utilized as well as by selecting core reactants with a different number of reactive terminal groups.

In another embodiment, a linear polymerization monomer may be copolymerized with the branching polymerization monomer during the branching polymerization step to provide a randomly branched copolymer structure as the branching segment. The addition of linear polymerization monomers does not change the number of branches in that the b + 1 branches per b moles of branching polymerization monomer relationship is maintained. Instead, the average distance between branches is extended depending upon the amount of linear polymerization monomer provided. This results in a reduced branching density within the branched segment. Any of the linear polymerization monomers set forth below, which can undergo polymerization with the branching polymerization monomer, can be utilized to provide copolymerization.

The core reactant and branching polymerization monomer may be selected to provide a core segment indistinguishable from the monomeric units present in the branching polymerization segment. Such a complex branched core segment can be produced by providing a core segment identical to linear polymerization monomers copolymerized with branching polymerization monomers during the

branching polymerization step. For examples, a core reactant such as ethylene glycol will provide an ethylene diether core segment indistinguishable from oxyethylene monomeric units derived by reacting ethylene oxide as a linear polymerization monomer which may be added during the branching polymerization step.

The third part of the connected branch copolymer structure is generated by reacting linear polymerization monomers onto the reactive sites in the branches of the branched core compound after the branching polymerization has been completed. The linear polymerization monomer is polymerized onto substantially each branch reactive site to produce sets of linear polymer segments for each branched polymer segment. In this manner, the linear polymer segments polymerized onto each branch reactive site provide branches with substantially similar chain lengths and compositions extending from each branch end. The chain length will depend upon the amount of linear polymerization monomer added, whereas the composition will depend upon the monomer or mixture of monomers provided during linear polymerization.

The term "substantially similar" is based on a statistical average for all connected branch copolymer molecules produced. With regard to composition, homopolymer linear segments will provide identical compositions within a group of such segments. For random or block copolymer linear segments, the composition will vary somewhat between individual segments but will provide an overall average of similar copolymeric substitution typical of random or block copolymers. With regard to

chain-length, most of the linear copolymerization segments will fall within a relatively narrow range of monomeric units per segment.

The average chain length of the linear polymer segments may vary, depending upon the reaction kinetics of the linear polymerization monomer utilized. With respect to the preferred alkylene oxide monomers, epoxide rings exhibit greater reactivity toward primary,. as opposed to secondary, hydroxyl groups. At a consequence, the average chain length for linear polymer segments extending from branch ends with primary hydroxyl groups will be greater than the average chain length for linear polymer segments extending from branch ends having secondary hydroxyl groups.

The proportion of primary to secondary hydroxyl groups is also important in determining reaction kinetics. The presence of predominantly secondary hydroxyl groups, will result in a lower probability for chain length extension from the single, terminal, primary hydroxyl group in each branched polymer segment.

Chain length reaction kinetics are also dependent upon the type of linear polymerization monomer. For example, ethylene oxide differs from the other alkylene oxides in that polymerization results in the production of primary hydroxyl groups, whereas polymerization of all the other alkylene oxides results in the formation of secondary hydroxyl groups. There will be correspondingly greater variation in chain length for ethylene oxide homopolymers and copolymers when such linear polymerization extends from a branched

polymer segment containing predominantly secondary hydroxyl groups.

In addition, greater availability of the hydroxyl groups near the end of the branched polymer segments remote from the core segment provides greater reactivity, resulting in the higher probability of chain length extension than at those branch ends having relatively higher steric hindrance, due to their proximity to the center of the core compound.

Chain lengths within each group of linear polymer segments are therefore "substantially similar" when considering that these competing reaction kinetics will provide a statistical average of chain lengths over a large number of molecules. The extent of chain length formation will vary directly with the amount of linear polymerization monomer utilized.

The linear polymerization monomer may be any compound or mixture of compounds which undergoes linear polymerization initiated by reacting onto the functional groups at the branch ends of the branched core reactant. Such monomers include alkylene oxides; lactones; lactams; and thio derivatives of the foregoing compounds; alkylene carbonates; siloxanes; alkyleneimines; or monomers which undergo linear copolymerization, such as dicarboxylic acids with diols or diamines, to produce polyesters or polyamides respectively; diisocyanates and glycols producing polyurethanes; and so on, so long as the linear polymerization monomer contains a reactive group which can react with the branch end of the branched core compound. The linear polymer segment

may be a block or random copolymer as results from combinations of monomers capable of linear copolymerization.

Preferred linear polymerization monomers include alkylene oxides and co-monomer mixtures thereof, such as ethylene oxide, propylene oxide or mixtures thereof. The co-monomers may be added simultaneously to form a linear random copolymer segment, or sequentially to form a linear block copolymer segment.

The amount of linear polymerization monomers added may be between 2 to ~~about~~ 600 moles, ~~and~~ preferably between 2 to ~~about~~ 350 moles, of linear polymerization monomer per branch end in the branched, core compound.

Reaction Conditions

Both branching and linear polymerization reaction steps may be carried out in the presence of suitable adjuvants, solvents, stabilizers, catalyst and other polymerization aids well known to those skilled in the art.

Various catalysts may be utilized in varying amounts, depending upon the type of polymerization being conducted. Such catalysts include caustic materials, such as alkali or alkaline earth metals or their corresponding hydroxides and alkoxides; Lewis acids; crown ethers and mineral acids~~, and so on~~. Selection of specific catalysts is considered to be within the skill of the art.

In a preferred embodiment, the amount of catalyst added during the branching polymerization

for glycidol monomers is from ~~about~~ 0.05 to ~~about~~ 15 weight percent, preferably ~~about~~ 0.1 to ~~about~~ 2 weight percent, and most preferably about 0.15 weight percent, of the molecular weight of the branched polymer product. Such polymerization reactions may be conducted at a temperature range from ~~about~~ 50° to ~~about~~ 300°C, preferably from 90° to ~~about~~ 150°C, and most preferably from 100° to ~~about~~ 120°C. The reactions may be conducted at inert atmospheric or inert super-atmospheric pressures, preferably from 0.69 to 13.8 bar and most preferably from 1.03 to 4,48 bar.

The type or amount of catalyst, temperature, pressure and other polymerization parameters will vary depending upon the type of polymerization, using those procedures well established in the prior art.

The polymerization reactions are conducted for a period of time sufficient to enable substantially all of the monomers to be consumed, i.e., for the polymerization to go to completion, i.e., exhaustion. Depending upon the amount and type of monomers provided, the time will vary and may take 6 hours or more for each polymerization step. Overall reaction time to form a highly branched copolymer will usually be less than 64 hours, preferably less than 36 hours, most preferably around 8 hours, when the process involves a series of sequential polymerizations.

The branching polymerization monomers are preferably slowly added during the branching polymerization step in order to avoid the formation

of monomer homopolymerization competing with polymerization onto the core reactant.

The two steps of branching and linear polymerizations may be repeated sequentially to the extent desirable and feasible in the particular reaction system used. Approximately 20 such repetitions is considered to be a practical maximum. Preferably the two steps are sequenced from 1 to ~~about~~ 10 times. This repetition produces a connected branch copolymer consisting of alternating branch and linear segments. The branching polymerization which occurs subsequent to a linear polymerization step entails reacting the branching polymerization monomer with the functional group at the end of the linear segments of the connected branch copolymer to provide a branch segment extending from each linear segment. The number of linear segments therefore increases with each subsequent branching step, such that the resulting branched copolymer may contain a large number of linear segments formed during the last polymerization step in a long series of polymerizations. As a result of the sequential polymerization steps, divalent linear segments are provided within the connected branch copolymer between branch segments. Monovalent linear segments are provided only by the last linear polymerization step. When the polymerization sequencing is ended with a branching polymerization step, the connected branch copolymer obviously contains only divalent linear segments. The connected branch copolymer will always contain two or more sets of linear polymer segments having substantially similar chain lengths and compositions within each set based upon

a single linear polymerization step. When multiple linear polymerizations are conducted, however, the group of linear polymer segments formed during one polymerization step can be varied substantially from that of other, separate polymerization steps.

The connected branch copolymer may be recovered using procedures well established in the art, and may include subsequent processing steps, such as neutralization using, for example, magnesium silicate, phosphoric acid, acetic acid or other well known neutralizing agents, in order to obtain the desired product in a stable form.

In a typical embodiment, a catalyzed core reactant is charged to a reactor at about 110°C under 1.38 bar ofnitrogen. The branching polymerization monomer or mixture of monomers is then added slowly to the reactor vessel. The reaction is continued until substantially all the branching polymerization monomers have been consumed. The resulting product can then be isolated before undergoing additional polymerization or, if the linear polymerization can be conducted using the same catalyst, the linear polymerization monomer or monomers mixture can be added to the reactor vessel, and the reaction allowed to go to completion.

If so desired, the branching and linear polymerizations are then repeated under similar conditions using the same constituents, or under different polymerization conditions, as required, if the branching or linear polymerization monomers are changed and require different reaction conditions. Once the polymerization reactions have been completed, the connected branch copolymer product is

removed from the reactor vessel, and may be neutralized and recovered.

Connected Branch Copolymer

Using such a procedure, a connected branch copolymer is produced with a core segment, and relatively ordered portions of alternating branched and linear polymer segments. The term "connected branch copolymers" is derived from the structure of the copolymers of the present invention containing branched polymer segments which are connected through a di- or polyvalent core segment and/or through divalent linear segments. As such the copolymers of the present invention always have a connected branch structure. In one sense, each branched segment having pendant linear polymer segments has a comb polymer structure wherein the branched segment represents the back of the comb with the linear segments as the teeth. Viewed in this way, the copolymers of the present invention can be regarded as connected comb polymers wherein the core segment and each divalent linear segment may end in comb substructures. The structures of the connected branch copolymers provide a unique molecular architecture quite different from the structures disclosed in the prior art.

Referring to the attached drawings, Figures 1 through 6 present schematic representations of polymers based on the following legend of types of polymer segments:

Legend for Figures 1-6

Core segment

Branch polymer segment

Linear polymer segment

Figure 1 presents a schematic representation of a typical randomly branched polymer disclosed by the prior art, containing a highly variable structure of alternating branched and linear segments. The linear segments are represented by the wavy lines, and the branched segments are represented by straight lines having branches perpendicular to the branched backbone. These structures are produced by the bulk polymerization of branching polymerization monomers with linear polymerization monomers.

Figure 2 presents a schematic representation of a typical star polymer of the prior art in which linear segments are bonded to the ends of a nucleating compound. The only branching that has been provided is derived from the multiple functional groups in the nucleating compound. Both the star polymer and the randomly branched copolymer fail to provide for two or more sets of linear polymer segments having substantially similar chain lengths and compositions within each set. As a consequence, the physical properties of the connected branch copolymers of the present invention differ significantly and certain properties, such as viscosity of the polymers in aqueous solutions, may be varied to cover a wider range of values than provided by star or randomly branched polymers. In essence, the amount of control over the structure and resulting properties of the polymers produced by the present invention is far greater than that which can be achieved by the linear, star or randomly branched polymers of the prior art.

Figure 3 shows a connected branch copolymer of the present invention having a divalent polymer

core segment, identified by the wavy line. The core segment has branched segments, identified by the straight line with short perpendicular lines identifying branch sites, located at each terminal bond of the core segment. Linear polymer segments, identified as wavy lines, extend from each branch polymer segment to provide two sets of linear polymer segments. All the linear polymer segments of both sets have substantially similar chain lengths and compositions due to the fact they were formed during one linear polymerization step. Figure 4 presents a similar branched polymer structure except that the divalent linear polymer core segment has been replaced by a tetravalent star core segment.

Figure 5 presents a connected branch copolymer similar to that in Figure 3 except that an additional branching and linear polymerization sequence has been conducted to provide an alternating series of branched and linear polymer segments. The monovalent linear polymer segments form the terminal portions of the polymer remote from the core segment and provide a second group of sets of linear polymer segments having substantially similar chain lengths and composition within that group.

Figure 6 is a schematic representation of a connected branch copolymer with a complex branched core segment having linear polymer segments extending from each branch end of the complex core compound.

Preferred connected branch copolymers of the present invention contain divalent linear

polymer segments extending between separate branched polymer segments. Monovalent linear polymer segments provide the terminal portions of the polymer remote from the core segment. The end of the monovalent linear polymer segments may be provided with a reactive group, such as amino, carboxyl, siloxyl, phosphate, hydroxyl or its corresponding salt. Preferably, the terminal functional group is a hydroxyl group or its corresponding salt.

The core segment of the connected branch copolymer preferably has a linear or star structure. A linear core segment could be monovalent but preferably would be divalent with branching polymer segments at both terminal bonds. Representative examples of linear core segments include polysiloxanes, polyoxyalkylenes, polyalkylenes, polyethers, polyamides, polyurethane or alkyl ethers. Star core segments are preferably polyethers derived from polyols such as glycerol, pentaerythritol, dipentaerythritol, trimethylol propane, trimethylol ethane; or disaccharides such as sucrose, glucose, mannitol or sorbitol.

Preferred branching polymer segments include polyamines and polyethers. A preferred branching polymer segment is a glycidyl polyether.

Representative examples of linear polymer segments include polyethers, polyamines or polysiloxanes. Preferred linear polymer segments include oxyethylene, oxypropylene, or random or block copolymers thereof.

The connected branch copolymers of the invention have a core segment with a valence, <u>v</u> of greater than or equal to 1 and preferably 2.

The average valence of each branched polymer segment per set - t, t', t'' and so on, depending on the number of sets - is at least about 3, preferably between ~~about~~ 3 and ~~about~~ 50, and most preferably between ~~about~~ 3 and ~~about~~ 20.

Defined in terms of structural formula, the connected branch copolymer of the present invention may be represented as:

$$\Big[ [(C' -)_n B' ]_x [(C)_m B - ]_y \Big]_z A \{ B (- C)_m \}_y [ B' (- C')_n ]_x \qquad (III)$$

wherein A is a core segment having a valence of $z$+1; B and B' are non-crosslinked, branched polymer segments having valences of $m$+1 and $n$+1 respectively; C and C' are linear polymer segments having substantially similar chain lengths and composition within each group of $x$ or $y$ segments; $m$ is greater than 1 and may vary between each set of $y$ linear polymer segments; $n$ is (1) greater than 1 or (2) may be 0 when $y$ is greater than 0; $x$ is (1) 1 when $y$ is 0 or (2) $m$ when $y$ is 1 and the product of all $m$ values when $y$ is greater than 1; $y$ and $z$ are each integers greater than or equal to 0; provided that $y$ is at least 1 when $z$ is 0.

Formula III utilizes particular parenthetical notations. Covalent bonds between different segments which extend through parentheses or brackets designate serial repetitions, such that the polymer segments enclosed in the brackets having the $y$ subscript represent a series of branched and linear segments repeating $y$ times. Covalent bonds falling within the parenthetical notations, such as the bonds between the branched and linear polymer segments and within the braces, designate parallel repetitions. As such, the values for $m$, $n$ and $z$

define the number of bonds extending out from B, B' and A, respectively. In other words, m and n determine the valences of the branched polymer segments and z determines the valence of the core segment.

When viewed using the parameters in Formula III, the connected branch copolymers of the present invention can be seen as containing a highly ordered arrangement of polymeric segments covering a wide variety of individual structures. The value y in Formula III equals the number of sequences in which the branching and polymerization steps have been repeated. The valence of the core segment, v equals z + 1. The valence of the branched polymer segments equals the corresponding m (or n) values + 1. Table 1 sets forth the parameters identified in Formula III for the various types of connected branch copolymers shown in Figures 3-6.

TABLE 1
FORMULA III PARAMETERS FOR VARIOUS CONNECTED BRANCH COPOLYMER STRUCTURES SHOWN IN DRAWINGS

| Figure | Type of Core Segment, A | m | n | x | y | z |
|---|---|---|---|---|---|---|
| 3 | Divalent Linear | -- | 5.5 | 1 | 0 | 1 |
| 4 | Tetravalent Star | -- | 3.25 | 1 | 0 | 3 |
| 5 | Divalent Linear | 5 | 2.9 | 5 | 1 | 1 |
| 6 | Complex Branched (A-B) | 28 | 2.93 | 28 | 1 | 0 |

As can be seen from Figure 6, a connected branch copolymer which contains a complex branch core segment is identified by the term "A-B" in Formula III.

A particularly preferred connected branch copolymer structure is:

$$(C'\text{-})_{n}B'\text{-}A\text{-}B'(\text{-}C')_{n} \qquad \text{(IV)}$$

wherein A, B', C' and _n_ are as previously defined; _y_ is 0; and _z_ is 1. An example of a connected branch copolymer satisfying Formula IV is one which contains a divalent linear core segment such as the polymeric structure represented in Figure 3.

The physical properties of the connected branch copolymer may be controlled by varying the types of reactants and monomers used to make up the various core, branch and linear segments of the polymer. A beneficial characteristic which may be provided by these branched polymers, useful in such applications as interfacial agents, can be established by providing relatively distinct hydrophobic and hydrophilic portions of the polymer. For example, the core segment can be made up of a relatively high molecular weight hydrophobic polymer, whereas the sets of linear polymer segments may be comprised of hydrophilic polymers, or vice versa. Due to the presence of a series of linear polymer segments, the linear segments portion of the polymer may provide an effective solvating means for a compound or a particle having a similar hydrophilicity to the linear segments within an otherwise hydrophobic environment similar to the hydrophobicity of the core segment.

Another characteristic of the connected branch copolymers produced by the present invention relates to their capacity to provide a large number of functional groups at the ends of the monovalent linear polymer segments remote from the core compound. Due to the relative symmetry of the connected branch copolymer having linear polymer segments of substantially similar chain lengths and

compositions within each set, a relatively large concentration of functional groups may be provided in a small area such that the polymer may act as a carrier for compounds which have the capacity to be associated with these functional groups. If the functional groups are hydroxy, the association may be in the form of hydrogen bonding. If the functional groups are ionic species, the association may be in the form of ionic bonds.

As a result of the wide variety of characteristics which the connected branch copolymers of the present may be prepared to have, these polymers may be useful in many applications. For example, in uses where viscosity control is of interest, viscosity is found to be one property of the connected branch copolymers of the present invention which demonstrates an unexpected and advantageous distinction over similar polymers set forth in the prior art. Polyalkylene oxide connected branch copolymers of the present invention have been shown to have lowered viscosities when compared to linear or star polyalkylene oxide polymers of similar molecular weight. Randomly branched polymers show a similar propensity for lowered viscosities like the connected branch copolymers of the present invention, but significant differences exist between these two types of structures. In this regard, the connected branch copolymers of the present invention may be designed to provide for a wide range of viscosities beyond the limits of the random branching structures, as well as lower viscosities than that which can be achieved through random branching. In addition,

other properties can be varied, such as water solubility, to provide for completely water-miscible polymers as distinguished from the partially water-soluble, randomly branched structures with similar molecular weight and composition.

Control of viscosity for high molecular weight polymers can be achieved through modification of chain length within a given composition. As demonstrated in Figure 7, linear polymers, identified by line A, show an increase in viscosity with increasing molecular weight. Correspondingly, star polymers, identified by line B, with the same polymer composition show a similar increase in viscosity with increase in molecular weight, but have correspondingly lower viscosities than the linear polymer structures as shown by line B positioned below line A in Figure 7. Connected branch copolymers produced by the present invention, noted by the "X" marks in Figure 7, show an even greater reduction in viscosity at the same molecular weight, than the viscosity values of corresponding linear and star polymers.

Although not wishing to be bound to any particular theory, this phenomenon may be due to the shorter chain lengths of the connected branched copolymers of the present invention when compared with the single chain length of the linear polymer, or the relatively few chain lengths of the star polymer, having similar molecular weights. A discussion of polymer viscosity may be found in an article entitled "Viscosity - Molecular Weight - Temperature - Shear Rate Relationships of Polymer Melts: A Literature Review," by N. G. Kumar, in the

Journal of Polymer Science: Macromolecular Reviews, Volume 15, at pages 255-325 (1980). According to one theory, viscosity increases gradually with increasing chain length up to a critical point where chain length is sufficient to create chain entanglement thereafter causing a significant increase in viscosity for increasing molecular weight. By providing highly branched structures, the critical point for chain entanglement can be extended significantly to much higher molecular weights, causing a significant reduction in viscosity for highly branched polymers when compared with linear or star polymers. Conversely, the connected branch copolymers of the present invention can be provided with fewer and longer chain lengths, thereby approaching the structures and viscosities of the star polymers.

Randomly branched polymers can achieve a similar effect to some degree by varying the concentration of branching polymerization monomer in the bulk polymerization with the linear polymerization monomer, as represented by lines C and C' in Figure 7. Randomly branched polymers, however, do not provide the flexibility in varying viscosity over a wide range, presumably since the orientation of linear segments within randomly branched polymers cannot be as readily varied as the chain length and orientation of linear segments in connected branch copolymers. Instead, randomly branched polymers inherently contain a wide variety of chain lengths of both branching and linear segments. Furthermore, randomly branched polymers show a dependence between viscosity and the amount

of branching polymerization monomer provided, in that at higher molecular weights greater concentrations of branching polymerization monomer provide relative reductions in viscosity.

In contrast, the connected branch copolymers of the present invention have no viscosity dependence upon the concentration of branching polymerization monomers within the polymer, and are therefore qualitatively distinct from randomly branched polymers with regard to viscosity control. There is, however, a viscosity relationship established for connected branch copolymers with respect to the amount of branching provided, such that greater branching will generally result in lowered viscosities. In addition, the critical point of chain entanglement in connected branch copolymers may be extended significantly beyond the critical points of the other polymer structures to provide lower viscosities at higher molecular weights than has heretofore been achieved.

The connected branch copolymers of the present invention also possess an unexpected and useful property shown by the increase in viscosity for a reduction in molecular weight when the chain length of the monovalent linear polymer segment is reduced to zero, shown by curved line D in Figure 7. This increase in viscosity may be the result of the interaction between the functional groups among the copolymer molecules or with the suspending medium. For example, when the functional groups are hydroxyl they may interact with the water molecules in an aqueous system resulting in a viscosity increase as the molecular weight is reduced. This

is in sharp contrast to the general rule that decreases in molecular weight will always result in lowering viscosity for these kinds of polymers. This effect also demonstrates the potential for the connected branch copolymer structures at lower molecular weight ranges to exhibit additional properties and utility due to the presence of such a large concentration of functional groups.

## EXAMPLES

In the following examples, the molecular weight of the polymers was determined based on hydroxyl number end-group analysis using the pyridine-phthalic anhydride treatment and acid titration procedures well known to those skilled in the art. Water solubility was determined by taking the weight percent of polymer material added to water up to the saturation point. Viscosity was determined using kinematic measurements based on procedures well known to those skilled in the art using a Cannon-Fenske viscometer. The connected branch copolymer product was neutralized, usually using magnesium silicate.

### Examples 1 - 10

Examples 1 through 10 were conducted to demonstrate a preferred process for producing connected branch copolymers of the present invention. Table 2 sets forth the amount of reactants used and product produced using the following procedures. A core reactant was prepared by dissolving potassium hydroxide in 100 grams of ethanol and adding the solution slowly to polyethylene glycol of the designated molecular weight. Water and alcohol were

removed under reduced pressure, and the designated amount of core reactant prepared was charged to a reactor vessel at 110°C under a pressure of (20 psi) 1,38 bar nitrogen. In the first polymerization step, glycidol, added as branching polymerization monomer, was added to the reactor and allowed to react to exhaustion. Ethylene oxide was added in Examples 2, 4, 5, 6, 7, and 10 in the designated amounts to provide for a reduced branching density during the branching polymerizations. After completion of the branching polymerization, ethylene oxide, as linear polymerization monomer, was added in up to three stages. Product was periodically removed from the reactor vessel in the amount shown in parentheses, in order to provide for the further addition of reactant material. The product was removed after the reaction was completed and treated with 3% magnesium silicate as a neutralizing agent.

TABLE 2
CONNECTED BRANCH COPOLYMER PRODUCTION

| Example | Core Reactant[a] Molecular Weight g./mole | Amount, g | Branching Polymerization, g: Branching Monomer[c] | Branching Polymerization, g: Linear Monomer[c] | Linear Polymerization,[d] g: First Addition | Linear Polymerization,[d] g: Second Addition | Linear Polymerization,[d] g: Third Addition | Connected Branch Copolymer, g |
|---|---|---|---|---|---|---|---|---|
| 1 | 600 | 854 | 639 | - | 549 (-598.4) | - | - | 929 |
| 2 | 1000 | 313.3 | 401. | 839 (2:1) | 505 | - | - | 1469. |
| 3 | 1000 | 790 | 630. | - | 680 (-600 ) | 1115 (-1018.6) | - | 725. |
| 4 | 1000 +[e] | 310 | 82.2 | 164 (2:1) | 1589 (-163) | 1589 (-575 ) | - | 1469 |
| 5 | 1000 | 609.4 | 180 | 740 (4:1) | 431 (-346.8) | 863 (-863 ) | 455 (-491) | 1557.6 |
| 6 | 1000 +[f] | 308 | 112.5 | 450 (4:1) | 215 (-212 ) | - | - | 655. |
| 7 | 600 | 356 | 382.1 | 764.2(2:1) | 500 (-495 ) | 1000 (-1000 ) | 522 (-522) | 1412 |
| 8 | 3247 | 1036 | 155 | - | 333.7 | - | - | 1500 |
| 9 | 1000 +[g] | 310 | 394.2 | - | 359 (-378 ) | 930 [h] | 453 (-498) | 1495 [i] |
| 10 | 600 | 147 | 274.4 | 1090 (4:1) | 390 (-391 ) | 900 (-912) | - | 482. |

a - Linear polyethylene glycol
b - Glycidol
c - Ethylene oxide, with approximate weight ratio of ethylene oxide to glycidol in parenthesis
d - Numbers in parentheses indicate amount of reactor vessel charge (in grams) which is removed prior to addition of linear polymerization monomer
e - 1200 g of ethylene oxide were reacted to the core reactant and 255 g of product removed prior to the branching polymerization
f - 1202 g of ethylene oxide were reacted to the core reactant and 568 gms of product removed prior to branching polymerization.
g - 1 115 g of ethylene oxide were reacted to the core reactant prior to branching polymerization
h - Reacted with 617 g of product from first addition previously neutralized and recatalysed with 3.86 g KOH
i - Product neutralized using phosphoric acid

The connected branch copolymer products were analyzed with the results listed in Table 3. The weight percent of glycidol was calculated based on the proportional amount of reactants. The water solubility was determined at 25°C, given in percent by weight, using the procedure set forth above. Viscosity measurements were taken at 65.5°C (neat) and 93.3°C (neat) and at 25°C in 50% aqueous solution. The physical form, at 25°C, is also set forth.

The formula setting forth the polymeric structure in the second column in Table 3 is a shorthand notation designating the monomeric units in each half of the connected branch copolymer. The first number designates the number of monomeric units in one-half of the core segment. The second number sets forth the average number of branched polymerization monomers in a branching segment, making up one-half the total number of branching polymerization monomeric units in the copolymer. When present, the parenthetical notation sets forth the number of linear polymerization monomers added along with each mole of branching polymerization monomer during the branching polymerization step, in terms of branching polymerization monomer to linear polymerization monomer, respectively. The last number designates the average moles of linear polymerization monomer per branch, i.e., per free hydroxyl in each branched segment prior to the linear polymerization step.

TABLE 3

CONNECTED BRANCH COPOLYMERS EVALUATION

| Example | Polymeric Structure[a] | Molecular Weight, g./mole | Glycidol, Weight % | Water Solubility, % by weight at 25°C | Viscosity, SUS at 65.5°C, neat | Viscosity, SUS at 93.3°C neat | Viscosity, SUS at 25°C 50% $H_2O$ | Form, at 25°C |
|---|---|---|---|---|---|---|---|---|
| 1 | bis 7-3-2 | 5 100 | 8.7 | miscible | 480 | 328 | 104 | liquid |
| 2 | bis 11-12(1:2)[b]-2 | 6,700 | 24.8 | miscible | 1 352 | 639 | 258 | liquid |
| 3 | bis 11-6-14 | 11 000 | 8.1 | 80 | 1 028 | 471 | 286 | paste |
| 4 | bis 57-3(1:2)[b]-14 | 14 000 | 3.2 | 70 | 3 352 | 1 546 | 620 | wax |
| 5 | bis 11-3(1:4)[c]-23 | 15 100 | 2.9 | 80 | 2 558 | 1 172 | 532 | wax |
| 6 | bis 57-6(1:4)[c]-2 | 20 100 | 4.4 | 70 | 3 696 | 1 538 | 548 | wax |
| 7 | bis 7-6(1:2)[b]-23 | 25 000 | 3.6 | 80 | 2 783 | 1 364 | 658 | wax |
| 8 | bis 40-3-60[c] | 26 100 | 1.8 | 70 | 8 277 | 3 740 | 1,568 | wax |
| 9 | bis 57-12-23 | 26 200 | 6.8 | 80 | 46,805 | 33 508 | 736 | wax |
| 10 | bis 7-12(1:4)[c]-14 | 32 700 | 5.4 | 80 | 2 243 | 1 043 | 557 | wax |

a. The numeric formula defines structure from the middle of the core segment in terms of moles of ethylene oxide as core monomer (one-half of total in molecule); average moles of glycidol as branching polymerization monomer (for that half); and average moles of ethylene oxide as linear polymerization monomer per branch (i.e., per free hydroxy in branching segment).

b. ~~About~~ 2 grams of ethylene oxide as linear polymerization monomer were added along with each gram of glycidol branching polymerization monomer during branching polymerization.

c. ~~About~~ 4 grams of ethylene oxide as linear polymerization monomer were added along with each gram of glycidol branching polymerization monomer during the branching polymerization.

Comparative Examples 11 through 14

Commercially available linear polyethylene glycol polymers were analyzed with the results set forth in Table 4 below.

TABLE 4

LINEAR POLYMER EVALUATION

| Example | Molecular Weight g /mole | Water Solubility, % by weight at 25°C | Viscosity, SUS at 65.5°C neat | at 93.3°C neat | at 25°C 50% $H_2O$ | Form, at 25°C |
|---|---|---|---|---|---|---|
| 11 | 3 200 | 62 | 1,212 | 526 | 315 | wax |
| 12 | 8 300 | 50 | 8,455 | 4,046 | 1,496 | wax |
| 13 | 13 100 | 50 | 64 466 | 32 096 | 6 156 | wax |
| 14 | 18 400 | 50 | NM | NM | 19.397* | wax |

NM - not measureable

* - 5% insoluble

Comparative Examples 15-17

Star polymers were prepared in Examples 15-17. Table 5 sets forth properties of star polymers of differing molecular weights. The values in Example 15 were measured on a commercially available polyethylene oxide star polymer in which ethylene oxide was polymerized onto glycerol to obtain a molecular weight of approximately 1500 grams per mole. Using the procedures set forth in Example 1, additional ethylene oxide was reacted onto samples of the material of Example 15 to achieve higher molecular weights of approximately 6000 and 23,400 g /mole with the results set forth in Table 5.

TABLE 5

STAR POLYMER EVALUATION

| Example | Molecular Weight, g/mole | Water Solubility, % by Weight at 25°C | Viscosity, SUS at 65.5°C. neat | Viscosity, SUS at 93.3°C. neat | Viscosity, SUS at 25°C. 50% $H_2O$ | Form, at 25°C |
|---|---|---|---|---|---|---|
| 15 | 1 500 | 80 | 210 | 96 | 78 | liquid |
| 16 | 6,000 | 80 | 2 489 | 1 164 | 573 | solid |
| 17 | 23 400 | 80 | 61 802 | 17,795 | 3 176 | solid |

Examples 18-28

Randomly branched copolymers were produced using procedures similar to those set forth in Examples 1-10, except that ethylene oxide and glycidol were simultaneously added to a reaction vessel containing diethylene glycol. Examples 18-22 were conducted using a weight ratio of 25% glycidol based on the total amount of glycidol and ethylene oxide added. The polymerization was continued until the designated molecular weight was obtained. The randomly branched polymers of Examples 23-28 were similarly produced, except that the weight ratio of 5% glycidol to total amount of monomers added was utilized. The resulting polymers were analyzed using the same tests set forth in Examples 1-10 above with the results given in Table 6.

TABLE 6

RANDOMLY BRANCHED COPOLYMER EVALUATION

| Example | Molecular Weight, g/mole | Glycidol, weight % | Water Solubility, % by weight at 25°C | Viscosity, sus at 65.5°C, neat | Viscosity, sus at 93.3°C neat | Viscosity, sus at 25°C 50% $H_2O$ | Form, at 25°C |
|---|---|---|---|---|---|---|---|
| 18 | 2,400 | 25 | 80 | 1 111 | 405 | 117 | liquid |
| 19 | 10 100 | 25 | 80 | 1 489 | 593 | 255 | liquid |
| 20 | 16 300 | 25 | 80 | 2 184 | 831 | 341 | liquid |
| 21 | 24 000 | 25 | 80 | 2,566 | 1 034 | 432 | liquid |
| 22 | 34,100 | 25 | 80 | 2 853 | 1,088 | 510 | liquid |
| 23 | 1,200 | 5 | 80 | 523 | 232 | 103 | wax |
| 24 | 4,600 | 5 | 80 | 1,044 | 493 | 330 | wax |
| 25 | 7 600 | 5 | 80 | 1 753 | 837 | 481 | wax |
| 26 | 11 300 | 5 | 80 | 2,576 | 1 114 | 628 | wax |
| 27 | 15,000 | 5 | 80 | 3,399 | 1,460 | 802 | wax |
| 28 | 25,800 | 5 | 80 | 4,192 | 1 780 | 999 | wax |

Examples 29-31

The procedure set forth in Example 3 was followed varying the amount of linear polymerization monomer added to the end of the branching segment. Table 7 sets forth the average number of monomeric units in each linear segment, along with the corresponding molecular weight and viscosity values.

TABLE 7

| Example | Average Monomeric Units in Linear Segment | Molecular Weight, g./mole | Viscosity, at 65.5°C neat, SUS |
|---|---|---|---|
| 29 | 0 | 7 600 | 3300 |
| 30 | 2 | 8 900 | 1125 |
| 3 | 14 | 11 000 | 1029 |
| 31 | 23 | 17 500 | 1565 |

Comparative Analysis for Examples 1-31

Based on the viscosity analysis as set forth above, the logarithmic values corresponding to the molecular weight, i.e., $M_n$, and viscosity values were calculated for Examples 1-31, and are set forth in Table 8.

TABLE 8

LOGARITHMIC VALUES FOR FIGURE 7

| Example | $M_{n(OH)}$ | $Log_{10}M_{n(OH)}$ | Viscosity, n at 65.5°C neat, SUS | $log_{10}n$ | Symbol |
|---|---|---|---|---|---|
| 1 | 5 100 | 3.71 | 480 | 2.68 | $X_1$ |
| 2 | 6 700 | 3.83 | 1 350 | 3.13 | $X_2$ |
| 3 | 11 000 | 4.04 | 1 029 | 3.01 | $X_3$ |
| 4 | 14 000 | 4.15 | 3 352 | 3.53 | $X_4$ |
| 5 | 15 100 | 4.18 | 2 558 | 3.41 | $X_5$ |
| 6 | 20 100 | 4.30 | 3 696 | 3.57 | $X_6$ |
| 7 | 25 000 | 4.40 | 2 783 | 3.44 | $X_7$ |
| 8 | 26 100 | 4.42 | 8 277 | 3.92 | $X_8$ |
| 9 | 26 200 | 4.42 | 46 805 | 4.67 | $X_9$ |
| 10 | 32 700 | 4.51 | 2 243 | 3.35 | $X_{10}$ |
| 11 | 3 200 | 3.51 | 1 212 | 3.08 | o |
| 12 | 8 300 | 3.92 | 8 455 | 3.93 | o |
| 13 | 13 100 | 4.12 | 64 466 | 4.81 | o |
| 14 | 18 400 | 4.26 | NM* | -- | |
| 15 | 1 500 | 3.18 | 210 | 2.32 | o |
| 16 | 6 000 | 3.78 | 2 489 | 3.40 | o |
| 17 | 23 400 | 4.37 | 61 802 | 4.79 | o |
| 18 | 2 400 | 3.38 | 1 111 | 3.05 | |
| 19 | 10 100 | 4.00 | 1 489 | 3.17 | |
| 20 | 16 300 | 4.21 | 2 184 | 3.34 | |
| 21 | 24 000 | 4.38 | 2 566 | 3.41 | |
| 22 | 34 100 | 4.53 | 2 853 | 3.46 | |
| 23 | 1 200 | 3.08 | 523 | 2.72 | |
| 24 | 4 600 | 3.66 | 1 044 | 3.02 | |
| 25 | 7 600 | 3.88 | 1 753 | 3.24 | |
| 26 | 11 300 | 4.05 | 2 576 | 3.41 | |
| 27 | 15 000 | 4.18 | 3 399 | 3.53 | |
| 28 | 25 800 | 4.41 | 4 192 | 3.62 | |
| 29 | 7 600 | 3.88 | 3 300 | 3.52 | |
| 30 | 8 900 | 3.95 | 1 125 | 3.05 | |
| 3 | 11 000 | 4.04 | 1 029 | 3.01 | $X_3$ |
| 31 | 17 500 | 4.24 | 1 565 | 3.19 | |

* Not measurable

13325

The experimental data was then plotted, as shown in Figure 7, wherein the abscissa, or X-axis, is the log of molecular weight, and the ordinate, or Y-axis, is the log of the viscosity at 65.5°C (neat), using the following legend:

| Polymer Data | Line | Symbol |
|---|---|---|
| Linear Polymer | A | • |
| Star Polymer | B | ○ |
| Randomly branched copolymer (5% branching monomer) | C | □ |
| Randomly branched copolymer (25% branching monomer) | C' | ■ |
| Connected "branch" copolymer | D | Δ,X |

Figure 7 shows that substantially linear relationships are established for linear polymers (shown as line A), star polymers (shown as line B), and randomly branched copolymers (shown as lines C and C'). In other words, these polymers demonstrate an increase in viscosity due to a proportional increase in molecular weight. In contrast, the values corresponding to various connected branch copolymers, identified by "X," do not exhibit this relationship. Instead, the viscosity can be varied over a wide range of values independent of a change in molecular weight. In this regard, it should be noted that the connected branch copolymers in Examples 7, 8 and 9, while having a similar molecular weight, vary significantly in viscosity.

Furthermore, the connected branch copolymers of the present invention exhibit an entirely distinct and unique property from the linear, star and randomly branched polymers of the

prior art. This effect is demonstrated by comparing Examples 3, 29, 30 and 31, plotted as curved line D in Figure 1. These examples demonstrate that shorter or no chain lengths of monovalent, linear polymer segments, in highly branched connected branch copolymers, provide for an increase in viscosity when molecular weight is decreased. A possible explanation for this property, may be due to the increased functionality produced by the relatively large number of functional groups at the end of the branched or linear segments. This effect is maximized when the chain length of the linear segments is reduced to zero, as in Example 29. Such structures contain a relatively large concentration of free hydroxyl groups along the unreacted branch segments which may interact through hydrogen bonding with hydroxyl groups from the same or other copolymer molecules, or from a suspending medium, thereby increasing the viscosity.

As is demonstrated in Figure 7 and the values in Tables 3-8, the connected branched copolymers of the present invention provide for viscosities which may be substantially less than the corresponding viscosities of linear and star polymers of similar molecular weight. Estimates of changes in viscosity for connected branch copolymers can be compared to star polymers and randomly branched copolymers by conducting a linear regression of the values in Tables 5 and 6; with the results are set forth in Table 9. The values set forth in Table 9 equal the ratio of the viscosity of the star polymer (or randomly branched copolymer) of the same molecular weight to the viscosity of the connected branch copolymers produced in Examples 1 through 10.

TABLE 9

CALCULATED VISCOSITY RATIOS FOR EQUIVALENT MOLECULAR WEIGHT POLYMERS

| | | Randomly Branched | |
|---|---|---|---|
| Example | Star | With 5 wt.% Glycidol | With 25 wt.% Glycidol |
| 1 | 4.0 | 2.8 | 2.9 |
| 2 | 2.5 | 1.2 | 1.1 |
| 3 | 9.6 | 2.3 | 1.8 |
| 4 | 5.1 | 0.84 | 0.60 |
| 5 | 8.0 | 1.2 | 0.80 |
| 6 | 11.0 | 0.99 | 0.62 |
| 7 | 25.0 | 1.5 | 0.89 |
| 8 | 9.3 | 0.54 | 0.30 |
| 9 | 1.7 | 0.095 | 0.054 |
| 10 | 61.0 | 2.3 | 1.2 |

The values in Table 9 indicate that a viscosity reduction can be achieved ranging from about 1/2 to 1/60 of the viscosity of the corresponding star polymer. The data also demonstrate that viscosity can varied from a small fraction of, as well as up to several times, the values provided by randomly branched polymers, showing a greatly increased flexibility in viscosity control, and potentially much greater efficiency in the use of more expensive branching polymerization monomers to achieve viscosity reductions.

Examples 32-34

These examples set forth the production of connected branch copolymers of the present invention similar to the types of compounds produced in Examples 1-10, but which have (1) a star core segment, (2) linear polymer segments produced from the copolymerization of ethylene oxide and propylene oxide, and (3) repetitive branched and linear polymerization segments.

Initially, pentaerythritol was extended with ethylene oxide/propylene oxide to produce the core reactant. This material was then extended with glycidol followed by ethylene oxide/propylene oxide, in three pairs of branching and linear polymerization steps to produce connected branch copolymers which were evaluated using the procedures set forth previously, with the results listed in Table 10.

Using procedures similar to Example 1, 55.7 g. pentaerythritol, 230 ml toluene, and 2.27 g. potassium hydroxide in ethanol were charged to a reactor vessel. 291 g. of propylene oxide were added simultaneously with 872.9 g ethylene oxide at a ratio of 3:1 of ethylene oxide to propylene oxide. The material was allowed to react to completion, and 400 grams of the resulting star polymer product were removed to be used as a core reactant. This core reactant was mixed with 5.5 grams potassium hydroxide and ethanol. 109.2 g of glycidol were added slowly. After the reaction was complete, 224 g propylene oxide were added simultaneously with 673 g ethylene oxide. After the reaction was complete, 912.6 g of the product were removed, neutralized and analyzed with the end

result set forth in Example 32. To the remaining material in the reactor vessel, 35 g of glycidol were added slowly and allowed to react to completion. Then, 59.5 g. propylene oxide and 178.5 g ethylene oxide were added simultaneously and the reaction allowed to go to completion. 355 gms of resulting product were removed, polymerized and analyzed with the results set forth as Example 33. 17 g of glycidol were slowly added to the material remaining in the reactor vessel. After the reaction was allowed to go to completion, 36 g of propylene oxide and 108.4 g. ethylene oxide were fed simultaneously. After the reaction was completed, the remaining material was removed, neutralized and analyzed with the results set forth as Example 34.

TABLE 10

CONNECTED BRANCH COPOLYMERS WITH

ALTERNATING BRANCHED AND LINEAR SEGMENTS

| Example | Molecular Weight, g./Mole | Viscosity, SUS at 25°C neat, | at 37.8°C neat, | at 65°C neat, | at 25°C 50% $H_2O$ |
|---|---|---|---|---|---|
| 32 | 13 028 | 11 908 | 6 052 | 2 470 | 584 |
| 33 | 18 722 | 15 372 | 7 711 | 2 791 | 733 |
| 34 | 27 333 | 16 880 | 8 636 | 1 843 | 924 |

Examples 35-36

These examples set forth connected branched copolymers of the claimed invention having star core segments, which are compared with conventional star polymers of the prior art. The polymers were prepared using the same commercially available star polymer set forth in Example 15, based on the procedures set forth in Examples 1-10 using the amounts of reactants set forth in Table 11.

The connected branch copolymers containing star core segments were evaluated using the same test procedures as with the previous examples, with the results set forth in Table 11. As can be seen by comparing Table 11 with Examples 16 and 17 in Table 5, the connected branch copolymers are more water soluble than the corresponding "linear" star polymers. The connected branch copolymers having star core segments also exhibit lower viscosities in aqueous solutions than conventional star polymers of corresponding molecular weights. Using the same procedures set forth in connection with Table 9 above, the calculated viscosity ratios of conventional star polymers to the connected branched copolymers having star core segments were calculated with the results listed in Table 11. The connected branch copolymers provide viscosity reduction of 1/5 and 1/19 of the viscosity of the corresponding star polymer having simply linear chain extension.

TABLE 11

CONNECTED BRANCH COPOLYMERS
WITH STAR CORE SEGMENTS

| Example | Molecular Weight, g·/mole | Glycidol, Weight % | Water Solubility, % by weight at 25°C | Viscosity, SUS at 65.5°C neat | Viscosity, SUS at 93.3°C neat | Viscosity, SUS at 25°C 50% $H_2O$ | Form, at 25°C | Viscosity Ratio[a] |
|---|---|---|---|---|---|---|---|---|
| 35 | 7,100 | 9.4 | 100 | 743 | 339 | 207 | Liquid | 5.1 |
| 36 | 19 900 | 3.4 | 90 | 2 057 | 973 | 683 | Solid | 19.0 |

a - Calculated ratio of viscosity of "linear" star polymers (of Examples 15-17) to connected branch copolymers having star core segment of equivalent molecular weight

Examples 37-39

These examples set forth the production of connected branched copolymers of various molecular weight having a complex branched, core segment. Ethylene glycol was utilized as the core reactant. The branching polymerization step involved the copolymerization of glycidol as branching polymerization monomer with ethylene oxide as a linear polymerization monomer provided to reduce the branching density within the branched polymer segment.

A catalyzed, core reactant was prepared by adding 2.6 g of potassium hydroxide in ethanol to 65 g distilled ethylene glycol. 48 g of the catalyzed, core reactant were charged to a reactor vessel at a 110°C under 1.38 bar of nitrogen. 725 g of glycidol and 400 g of ethylene oxide were fed simulataneously into the reactor, and the material was allowed to react to completion. 488 g of ethylene oxide were added slowly and were allowed to react to completion. 331 g of this material were removed and an additional 178 g of ethylene oxide were added slowly and allowed to react to completion. The connected branched copolymer produced was removed, neutralized and analyzed as Example 37 in Table 12.

210 g of this material were used to produce higher molecular weight material by catalyzing with 1.86 g of potassium hydroxide and ethanol. 200 g of the catalyzed material were charged to a reactor vessel and 521 g of ethylene oxide were added slowly and allowed to react to completion. 398 g of this material were removed, neutralized and analyzed as Example 38 in Table 12.

195 g of ethylene oxide were added to the remaining material in the reactor and allowed to react to completion. The connected branched copolymer so produced used was removed, neutralized and analyzed as Example 39 in Table 12.

The viscosity analysis demonstrates that the connected branched copolymers of the present invention, having a complex branched, core segment, provide lower viscosities than linear, star or randomly branched copolymers of equivalent molecular weight, as demonstrated by the calculated viscosity ratios determined by the viscosity of the various polymers of the prior art over the viscosity of the connected branched copolymer at equivalent molecular weights. Similar to Examples 29 and 30, Example 37 demonstrates an increase in viscosity at lower molecular weight than connected branched copolymer of Example 38, presumably due to the greater concentration of the hydroxyl functional groups in the connected branched copolymer having shortened chain lengths in the linear polymer segments.

TABLE 12

CONNECTED BRANCH COPOLYMERS
WITH COMPLEX BRANCHED, CORE SEGMENT

| Example | Molecular Weight, g'/mole | Glycidol, Weight % | Water Solubility, % by weight at 25°C | Viscosity, SUS at 25°C neat | Viscosity, SUS at 65.5°C neat | Viscosity, SUS at 93.°C neat | Viscosity, SUS at 25°C 50% $H_2O$ | Viscosity Ratio Linear | Viscosity Ratio Star | Viscosity Ratio Randomly Branched % Glycidol 25% | Viscosity Ratio Randomly Branched % Glycidol 5% |
|---|---|---|---|---|---|---|---|---|---|---|---|
| 37 | 5, 500 | 13 | 100 | 11 150 | 1 023 | 385 | 115 | 4.1 | 2.2 | 1.7 | 1.4 |
| 38 | 5 900 | 12 | 100 | 4 507 | 734 | 354 | 223 | 6.8 | 3.5 | 2.4 | 2.1 |
| 39 | 11 000 | 7 | 100 | Solid | 1 103 | 518 | 264 | 25.3 | 8.9 | 1.6 | 2.2 |

Example 40

This example sets forth the production of connected branched copolymers containing repeating oxypropylene units in the core and linear segments, as opposed to oxyethylene homopolymers or copolymers as described previously. The experimental procedures were similar to those set forth in Example 1 except that polypropylene glycol having molecular weight of 425 g /mole was utilized as the core reactant instead of polyethylene glycol; and propylene oxide was utilized as linear polymerization monomer instead of ethylene oxide.

The procedure included providing 23.4 kg of polypropylene glycol as coreactant which was catalyzed with 6.84 kg of 39.47 percent of potassium hydroxide in aqueous solution. 23.4 kg of glycidol were added as branching polymerization monomer and allowed to react to completion. 337.5 kg of propylene oxide were then added and allowed to react to completion. 170 kg of the materials produced were removed and an additional 170 kg of propylene oxide were added and allowed to react for 3.5 hours, and an additional 22.5 kg of propylene oxide were added. The polymerization was allowed to go to exhaustion and the connected branched copolymer so produced was removed, neutralized and analyzed and possessed a number average molecular weight, $M_n$, of 11,200 ± 2,000 based on the hydroxyl number. The connected branched copolymer exhibited a neat viscosity at 25°C of 1320 SUS.

Example 41

This example sets forth the production of

connected branch copolymers using tetraethylene pentamine as the branching polymerization monomer.

26.6 g of tetraethylene pentamine were charged to a 200 ml glass reactor. 3.4 ml $BF_3$-etherate were added with stirring. 75.6 g 1-aziridine-ethanol were added slowly. After addition was complete, the solution was allowed to stir for 1 hour at room temperature to ensure completion of the reaction. 104.6 g. of this core-branching segment of solution were transferred to a 70°C autoclave. An additional 1.3 ml. $BF_3$-etherate were added. After the material was allowed to come to equilibrium, 352 g. of ethylene oxide were added slowly. After reaction was complete, 422 g of material were removed from the reactor. After vacuum stripping, 100 g. of this material were added to 150 ml. methanol, acidified and filtered cold to remove the catalyst. The methanol was stripped and the properties measured with the following results:

| | VISCOSITY, SUS | | | | |
|---|---|---|---|---|---|
| Molecular Weight g /mole | at 25°C neat | at 37.8°C neat | at 65°C neat | at 25°C 50% $H_2O$ | Water Solubility (% by weight) |
| 4 022 | 50 963 | 18 185 | 3 352 | 109.8 | Complete |

## CLAIMS

1. A connected branch copolymer comprising:

(1) a core segment having a valence of v, wherein v is an integer, and having correspondingly v terminal bonds connected to:

(2) v polyvalent, non-crosslinked branched polymer segments each having an average of t terminal bonds, wherein t is greater than about two, and wherein each of said branched polymer segments is connected to:

(3) a set of linear polymer segments, with an average of t-1 linear polymer segments per set, to provide a group of about v (t-1) linear polymer segments wherein the linear polymer segments have substantially similar chain lengths and composition within said group.

2. The connected branch copolymer of claim 1 wherein the linear polymer segments are divalent containing terminal bonds connecting to a second set of about v (t-1) branched polymer segments each having an average of t terminal bonds.

3. The connected branch copolymer of claim 2 wherein each of the branched polymer segments in the second set is connected to a second set of linear polymer segments, with an average of t'-1 linear polymer segments per set, wherein t' is greater than about two, providing a second group of about (t'-1)[v(t-1)] linear polymer segments in the second set, and wherein the linear polymer segments have substantially similar chain lengths and compositions within said second group.

4. The connected branch copolymer of claim 3 wherein a plurality of alternating branched polymer segments and linear polymer segments are provided extending away from the core segment.

5. The connected branch copolymer of claim 4 wherein the last group of linear polymer segments extending furthest from the core are monovalent segments each having a terminal functional group.

6. The connected branch copolymer of claim 5 wherein the terminal functional group is amino, hydroxyl, siloxyl, phosphate, carboxyl, or corresponding salts thereof.

7. The connected branch copolymer of claim 1 to 6 wherein the core, branched and linear segments provide separate hydrophobic and hydrophilic portions of the polymer.

8. The connected branch copolymer of claim 1 wherein the core segment has a linear or star structure.

9 . The connected branch copolymer of claim 8 having a divalent linear core segment connecting 2 polyvalent, non-crosslinked, branched polymer segments, thereby connected to 2 sets of linear polymer segments.

10 . The connected branch copolymer of claim 9 wherein the linear core segment is a

polysiloxane, polyoxyalkylene, polyalkylene, polyester, polyamide, polyurethane or an alkyl ether.

11. The connected branch copolymer of claim 8 wherein the star core segment is a polyether derived from reacting an alkylene oxide with glycerol, pentaerythritol, dipentaerythritol or trimethylolpropane.

12. The connected branch copolymer of claim 1 wherein the core segment is identical to monomeric units of the branched segments providing a complex branched, core segment.

13. The connected branch copolymer of claim 12 wherein the complex branched, core segment is a glycidyl polyether polymerized onto an ethylene glycol core reactant.

14. The connected branching copolymer of claim 1 wherein the branched polymer segment is a polyether or polyamine.

15. The connected branch copolymer of claim 14 wherein the branched polymer segment is a glycidyl polyether.

16. The connected branch copolymer of claim 1 wherein the linear polymer segment is a polyether, polyamine or polysiloxane.

17. The connected branch copolymer of claim 16 wherein the linear polymer segment is an oxyalkylene homopolymer, or a random or block copolymer of an oxyalkylene.

18. The connected branch copolymer of claim 1 wherein at least one of the branched polymer segments has a reduced branching density due to the presence of linear polymer segments within the branched polymer segment.

19. The connected branch copolymer of claim 1 with the structure:

$$\Big[ [(C' -)_n B']_x [(C)_m B]_y \Big]_z A [B(C)_m]_y [B'(-C')_n]_x$$

wherein A is a core segment having a valence of $\underline{z}+1$; B and B' are noncrosslinked, branched polymer segments having valences of $\underline{m}+1$ and $\underline{n} + 1$, respectively; C and C' are linear polymer segments having substantially similar chain lengths and composition within each group of $\underline{x}$ or $\underline{y}$ segments; $\underline{m}$ is greater than 1 and may vary between each set of linear polymer segments; $\underline{n}$ is (1) greater than 1 or (2) may be 0 when $\underline{y}$ is greater than 0; $\underline{x}$ is (1) 1 when $\underline{y}$ is 0 or (2) $\underline{m}$ when $\underline{y}$ is 1 and the product of all $\underline{m}$ values when $\underline{y}$ is greater than 1; $\underline{y}$ and $\underline{z}$ are each integers greater than or equal to 0; provided that $\underline{y}$ is at least 1 when $\underline{z}$ is 0.

20. The connected branched copolymer of claim 19 wherein $\underline{y}$ is 0 and $\underline{z}$ is 1, having the structure:

$$(C' -)_n B' - A - B'(-C')_n$$

wherein A, B', C' and $\underline{n}$ are as previously defined.

21. A process for producing connected branch copolymers as claimed in claim 1 to 20 comprising:

(1) reacting a core reactant having at least one reactive terminal group with non-crosslinking, branching

polymerization monomers by polymerizing said monomers to completion, to produce a branched, core compound having a mono-, di- or polyvalent core segment terminated with non-crosslinked, branching polymer segments each having at least two branch sites remote from the core segment; followed by

(2) polymerizing linear polymerization monomers onto the branch sites of the branched, core compound to provide a linearly extended, branched, core compound as a connected branch copolymer having linear polymer segments with substantially similar chain lengths and compositions extending from the branch sites.

22. The process of Claim 21 wherein said core reactant in step (1) is a linearly extended, branched, core compound produced from steps (1) and (2).

23. The process of claim 22 wherein steps (1) and (2) are repeated sequentially to produce connected branch copolymers containing alternating branched and linear polymer segments.

24. The process of Claim 23 wherein steps (1) and (2) are repeated sequentially between 2 to about 20 times.

25. The process of Claim 24 wherein the sequential reactions end with step (1) to produce a

branched, core compound as the connected branch copolymer.

26. The process of Claim 21 wherein the core reactant is a linear or star compound.

27. The process of Claim 26 wherein the linear core reactant is polysiloxane, polyoxyalkylene, polyalkylene, polyester, polyamine, polyurethane, or an alcohol.

28. The process of Claim 26 wherein the star core reactant is glycerol, pentaerythritol, trimethylolpropane, or polyether derivatives of such compounds.

29. The process of Claim 21 wherein the core reactant produces a core segment identical to a monomeric unit produced by the noncrosslinking, branching monomer, providing a complex branched, core compound.

30. The process of Claim 29 wherein the complex branched, core compound is a glycidyl polyether.

31. The process of Claim 21 wherein the branching polymerization monomer has a structure:

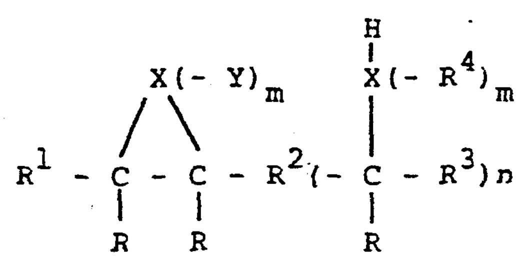

wherein X is nitrogen, oxygen, or sulfur; Y is alkyl, alkylamine or hydroxyalkyl; R is hydrogen or

lower alkyl; $R^1$ and $R^3$ are each hydrogen, alkyl, aryl or aralkyl; $R^2$ is (1) an alkyl, aryl or aralkyl group which may be connected to $R^1$ to form a cyclic ring or (2) hydrogen when n is 0; $R^4$ is hydrogen or lower alkyl; m is (1) 0 when X is oxygen or sulfur or (2) 1 when X is nitrogen; n is 0 or 1 provided that n is 1 when X is oxygen or sulfur.

32. The process of Claim 31 wherein the branching polymerization monomer is (1) an imine or (2) an oxirane compound with one other complementary functional group.

33. The process of Claim 32 wherein the branching polymerization monomer is glycidol.

34. The process of Claim 21 wherein the linear polymerization monomer is an alkylene oxide, glycol, phenol, siloxane, or amine, which undergoes linear polymerization. ethylene oxide, propylene oxide or mixtures thereof.

35. The process of Claim 34 wherein the linear polymerization monomer comprises a co-monomer mixture of alkylene oxides.

36. The process of Claim 35 wherein the co-monomers are added sequentially to form linear, block copolymer segments.

37. The process of Claim 21 wherein between 2 to about 50 moles of branching polymerization monomers are provided in step (1) per

equivalent of core reactant and between 2 to about 600 moles of linear polymerization monomers are provided in step (2) per branch end.

38. The process of Claim 37 wherein between 2 to about 20 moles of branching polymerization monomers per equivalent of core reactant and between 2 to about 350 moles of linear polymerization monomers per equivalent of branching polymerization monomer are provided.

39. The process of Claims 21 or 22 wherein a linear polymerization monomer is added during step (1) to provide a branched, core compound having a reduced branching density.

40. The process of Claim 21 wherein the branching polymerization monomers are slowly added during step (1).

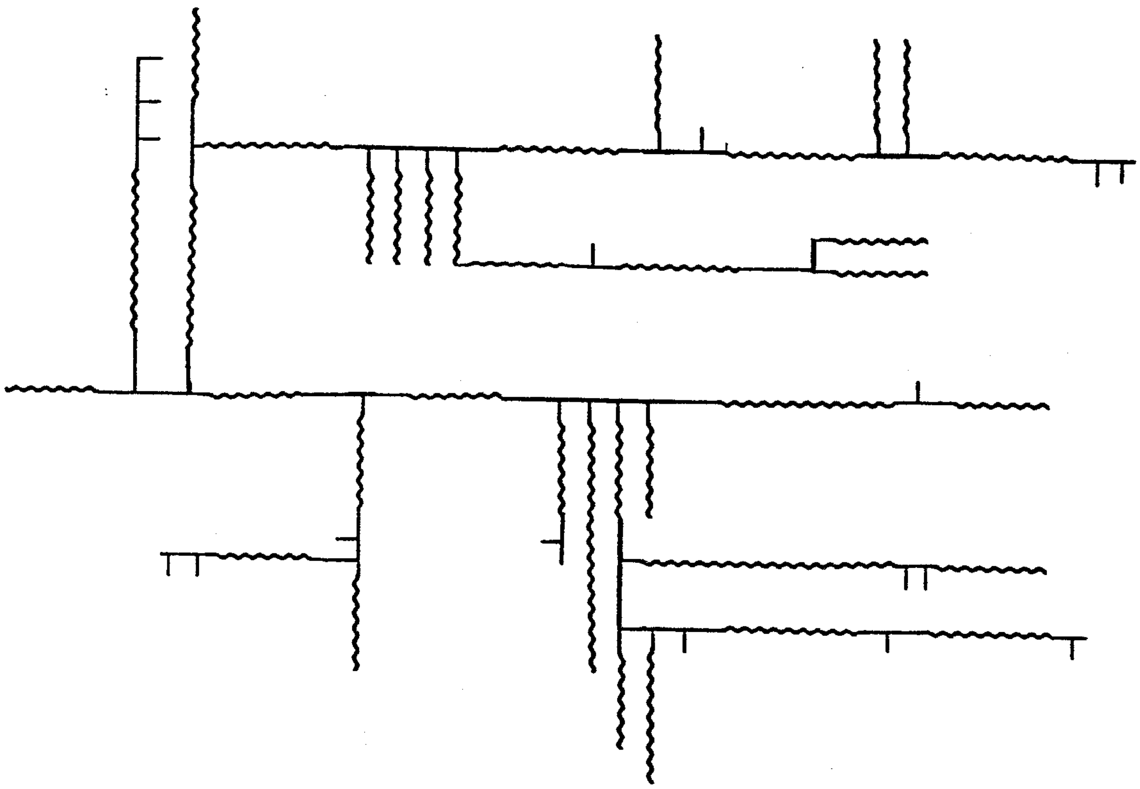

FIG. 1

(PRIOR ART)

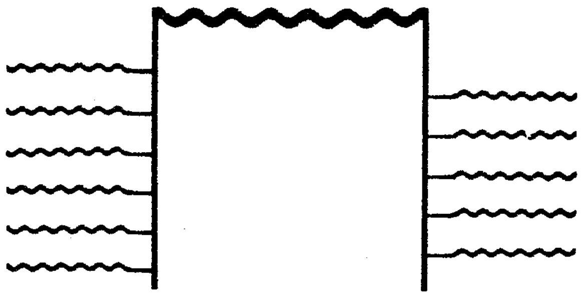

FIG. 3

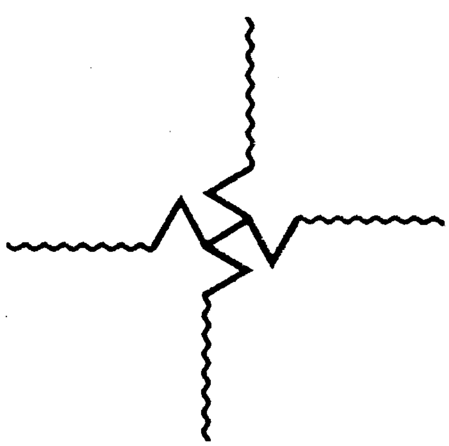

FIG. 2
(PRIOR ART)

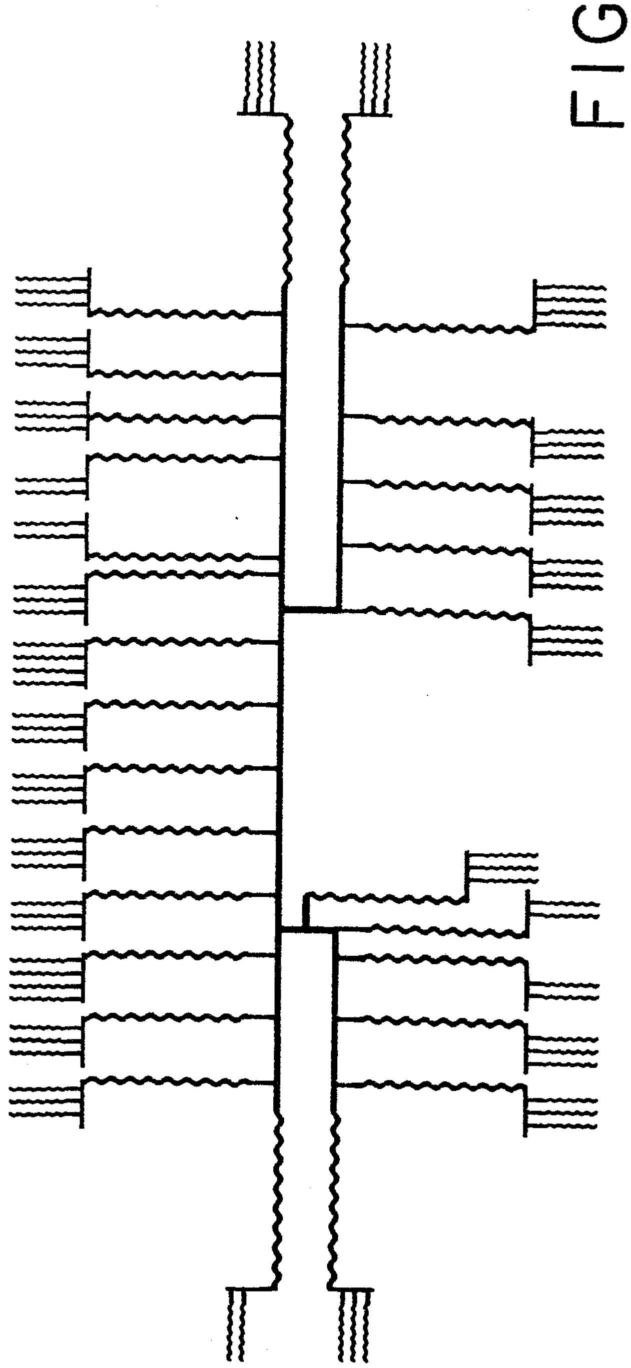

FIG. 6

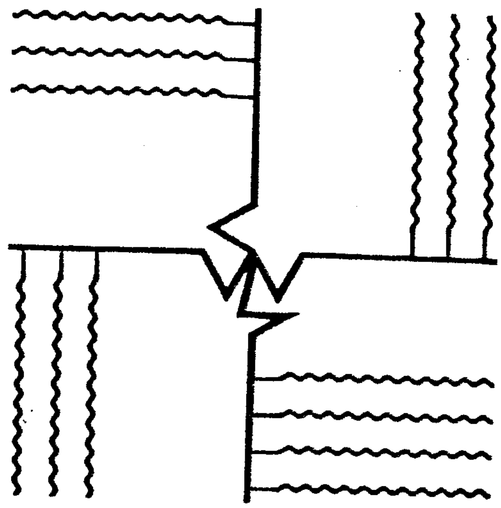

FIG. 4

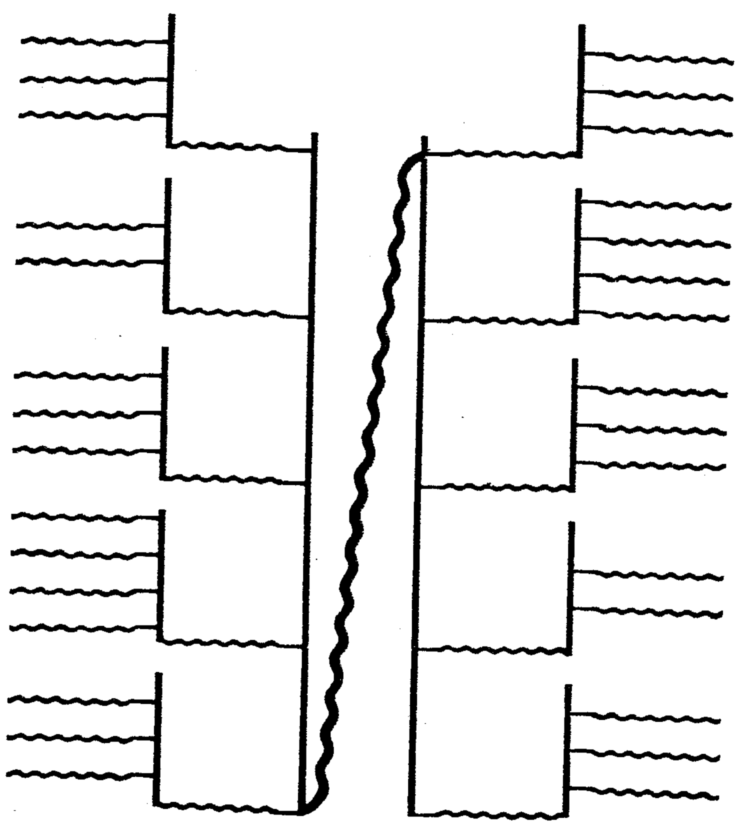

FIG. 5

FIG. 7

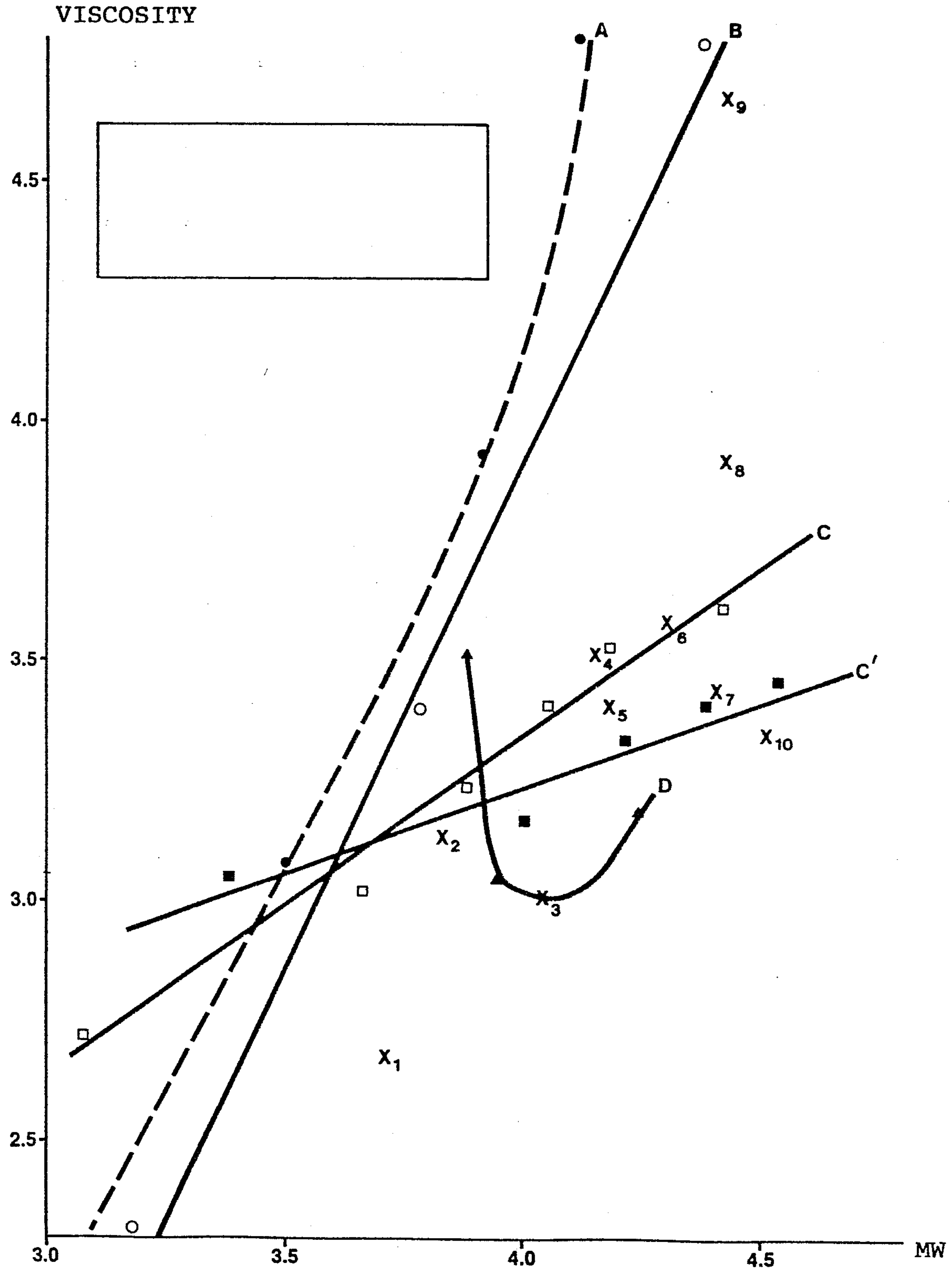
VISCOSITY
4.5
4.0
3.5
3.0
2.5
3.0
3.5
4.0
4.5
MW
A
B
C
C'
D
$X_1$
$X_2$
$X_3$
$X_4$
$X_5$
$X_6$
$X_7$
$X_8$
$X_9$
$X_{10}$